# EUROPÄISCHE PATENTSCHRIFT

(11) **EP 1 223 065 B1**
(45) Veröffentlichungstag und Bekanntmachung des Hinweises auf die Patenterteilung: **17.03.2004**
(21) Anmeldenummer: 01130985.3
(22) Anmeldetag: 28.12.2001
(51) Int. Cl.: B60J 7/043, B60J 7/053

(54) **Fahrzeugdach**
Vehicle roof
Toit de véhicule

(30) Priorität: 11.01.2001 DE 10117322
(43) Veröffentlichungstag der Anmeldung: 17.07.2002
(73) Patentinhaber: Webasto Vehicle Systems International GmbH, 82131 Stockdorf (DE)
(72) Erfinder: Radmanic, Stjepan, 82291 Mammendorf (DE)
(74) Vertreter: Wiese, Gerhard

(56) Entgegenhaltungen:
- EP-A- 0 403 388
- DE-C- 4 238 945
- DE-C- 19 713 348
- US-A- 5 358 303

## Beschreibung

Die Erfindung betrifft ein Fahrzeugdach gemäß dem Oberbegriff des Anspruchs 1.

Aus der DE 42 38 945 C1 ist ein Fahrzeugdach mit wenigstens einem Deckel bekannt, der zum Öffnen mittels eines Ausstellhebels an seiner Hinterkante anhebbar und anschließend oberhalb des festen Fahrzeugdachs verschiebbar ist. Die Verschiebebewegung erfolgt mittels eines ersten Antriebskabels, und die Ausstellbewegung erfolgt mittels eines gegenläufig zu diesem bewegbaren zweiten Antriebskabels. Ein die Ausstellbewegung steuernder Ausstellhebel steht über einen hinteren Schlitten in ständigem Eingriff mit dem einen Antriebskabel, während ein nahe der Vorderkante angeordneter Schlitten, der für die Verschiebebewegung des Deckels zuständig ist, in ständigem Eingriff mit dem gegenläufig hierzu bewegbaren anderen Antriebskabel steht. Durch diese ständige Kopplung ist eine vollständige Trennung der Ausstellbewegung von der Verschiebebewegung nur bedingt möglich, und für die Ausstellbewegung steht nur ein relativ kurzer Verfahrweg des Antriebskabels zur Verfügung.

Die Nachteile des vorstehend erläuterten bekannten Fahrzeugdachs werden durch ein Fahrzeugdach der eingangs genannten Art überwunden, das in der DE 197 13 348 C1 offenbart ist. Insbesondere gewährleistet dieses Fahrzeugdach eine klar definierte Position des Deckels während der Ausstellbewegung durch Verriegelung eines die Verstellbewegung des Deckels bewegenden Steuerschlittens während der Ausstellbewegung über einen Riegelstein mit einer dachfesten Führungsschiene. Durch die Entkopplung von der Führungsschiene und gleichzeitige Kopplung mit einem Steuerschlitten wird ein eindeutiger Beginn der Verschiebebewegung definiert, da das erste Antriebskabel nach Beendigung eines Leerweges bei vollendeter Ausstellbewegung den Riegelstein aus seiner Verriegelungsposition mit der Führungsschiene in eine Kopplungsposition des Antriebskabels mit dem Steuerschlitten bewegt.

Nachteilig bei diesen beiden bekannten Dächern ist, daß der Deckel in Schließposition nur über den Ausstellhebel und einen in der Führungsschiene verschiebbaren Schlitten gehalten wird. Bei einem Unfall mit einer Airbag-Auslösung oder einem Kopf-Aufprall eines Insassen gegen die Innenseite des Deckels wirken unter ungünstigen Umständen Ausdrückkräfte auf den Deckel, die von dieser Anbindung nicht mehr abgefangen werden können. Die Deckelanbindung versucht sich dann aus einem Gleitelement am Ausstellhebel herauszudrehen.

Aus der EP 0 403 388 A1 ist ein Hebedach bekannt, bei dem an dessen vorderem Ende ein Steuermechanismus zum Ausstellen des Hebedachs und an dessen hinterem Ende eine Verriegelungsvorrichtung zur vertikalen Verriegelung des Hebedachs in dessen geschlossener Stellung angebracht sind. Die Verriegelungsvorrichtung besteht aus einem an der Deckelhalterung angebrachten Winkel und einer an einem bewegbaren Schlitten angebrachten Lasche, die in der Verriegelungsstellung übereinander angeordnet sind und die beim Öffnen des Hebedachs durch eine Translationsbewegung außer Eingriff gebracht werden können.

Der Erfindung liegt die Aufgabe zugrunde, ein Fahrzeugdach der eingangs genannten Art zu schaffen, in dessen hintere Verstell- und Hubmechanik eine Verriegelungsvorrichtung für eine erhöhte Crash-Sicherheit integriert ist.

Diese Aufgabe wird bei einem gattungsgemäßen Fahrzeugdach dadurch gelöst, daß an dem Ausstellhebel und an einem mit dem Deckel verbundenen Teil jeweils in der Schließposition des Deckels wirksame Verriegelungselemente befestigt sind, die einem Ausdrücken des Deckels nach oben entgegenwirken. Vorteilhafte Weiterbildungen der Erfindung sind in den Unteransprüchen angegeben.

Durch die Verriegelungselemente wird gewährleistet, daß der Deckel in Schließposition über den Hub- und Verschiebemechanismus sicher mit der Führungsschiene am festen Fahrzeugdach verriegelt ist und auch bei einem starken Druck gegen die Innenseite nicht nach oben aus der Dachöffnung gedrückt werden kann.

Das mit dem Deckel verbundene Teil wird bevorzugt von einer Deckelführung gebildet, die mit einem Teil des Hub- und Verschiebemechanismus in Eingriff steht und eine Relativbewegung desselben gegenüber dem Deckel beim Ausstellen ermöglicht. Durch diese Relativbewegung ist eine einfache Entkoppelung der Verriegelungselemente möglich.

Besonders bevorzugt einsetzbar ist die Erfindung an einem solchen Fahrzeugdach, bei dem der Deckel oberhalb des festen Fahrzeugdachs nach hinten verschiebbar ist.

Nachfolgend wird die Erfindung anhand der Zeichnungen beispielhaft näher erläutert. Es zeigt:
- Fig. 1: eine schematische perspektivische Ansicht eines Fahrzeugdachs mit geschlossenem Deckel,
- Fig. 2: eine Darstellung gemäß Fig. 1 bei vollständig geöffnetem Deckel,
- Fig. 3: einen Längsschnitt durch einen Seitenrand des Fahrzeugdachs im Bereich der Ausstellmechanik bei geschlossenem Deckel,
- Fig. 4: einen Längsschnitt gemäß Fig. 3 durch eine vordere Ausstellmechanik in vergrößerter Darstellung,
- Fig. 5: einen Längsschnitt gemäß Fig. 3 durch eine hintere Ausstellmechanik in vergrößerter Darstellung,
- Fig. 6: einen Längsschnitt durch einen Seitenrand des Fahrzeugdachs im Bereich der Ausstellmechanik bei ausgestelltem Deckel,
- Fig. 7: einen Längsschnitt durch einen Seitenrand des Fahrzeugdachs im Bereich der Ausstellmechanik am Ende einer Übergangsbewegung,
- Fig. 8: einen Längsschnitt durch einen Seitenrand des Fahrzeugdachs im Bereich der Ausstellmechanik in einer Zwischenstellung,
- Fig. 9: einen Längsschnitt durch einen Seitenrand des Fahrzeugdachs im Bereich der Ausstellmechanik bei geöffnetem Deckel,
- Fig. 10: einen Längsschnitt gemäß Fig. 3 durch eine hintere Ausstellmechanik in geschlossener Position des Deckels mit der in Eingriff befindlichen Verriegelung,
- Fig. 11: einen Längsschnitt gemäß Fig. 3 durch eine hintere Ausstellmechanik in einer ausgestellten Zwischenposition des Deckels mit außer Eingriff befindlicher Verriegelung,
- Fig. 12: einen Längsschnitt gemäß Fig. 3 durch eine hintere Ausstellmechanik in vollständig ausgestellter Position des Deckels mit außer Eingriff befindlicher Verriegelung,
- Fig. 13: einen Querschnitt gemäß der Linie A - A in Fig. 10, und
- Fig. 14: einen Querschnitt gemäß der Linie B - B in Fig. 10.

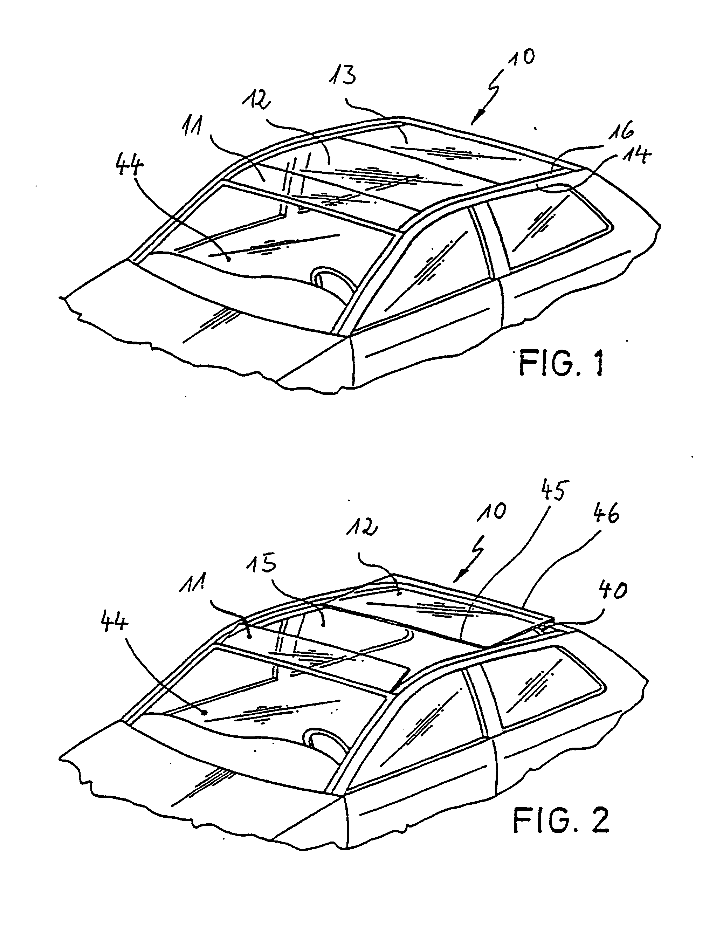

Ein Fahrzeugdach 10 (siehe Fig. 1) umfaßt eine oberhalb einer Windschutzscheibe 44 schwenkbar angeordnete Windabweiserlamelle 11, einen hinter dieser Windabweiserlamelle 11 liegenden verschiebbaren Deckel 12 und eine sich an den geschlossenen Deckel 12 anschließende feste Dachscheibe 13. Seitlich werden die Windabweiserlamelle 11, der Deckel 12 und die Dachscheibe 13 jeweils von einem Seitenholm 14 begrenzt.

Im geschlossenen Zustand gemäß Fig. 1 bietet das Fahrzeugdach 10 ein vollkommen glattflächiges Erscheinungsbild. Obwohl der Deckel 12 zur Freigabe einer Dachöffnung 15 nach hinten über das feste Fahrzeugdach 10 verschiebbar ist (siehe Fig. 2), sind hierzu keinerlei oberhalb des festen Fahrzeugdachs 10 angeordnete Führungen erforderlich. Im ausgestellten und nach hinten verfahrenen Zustand wird der Deckel 12 vielmehr mittels seitlich im Bereich der Hinterkante 46 des Deckels 12 angelenkter Stützhebel 40 abgestützt, welche in unterhalb des Niveaus der festen Dachhaut angeordneten Führungen verfahrbar sind und welche beim Austreten nach oben ein flexibles Dichtelement 16 teilweise verdrängen, welches zwischen den Seitenholmen 14 und den Bauteilen 11, 12 und 13 angeordnet ist.

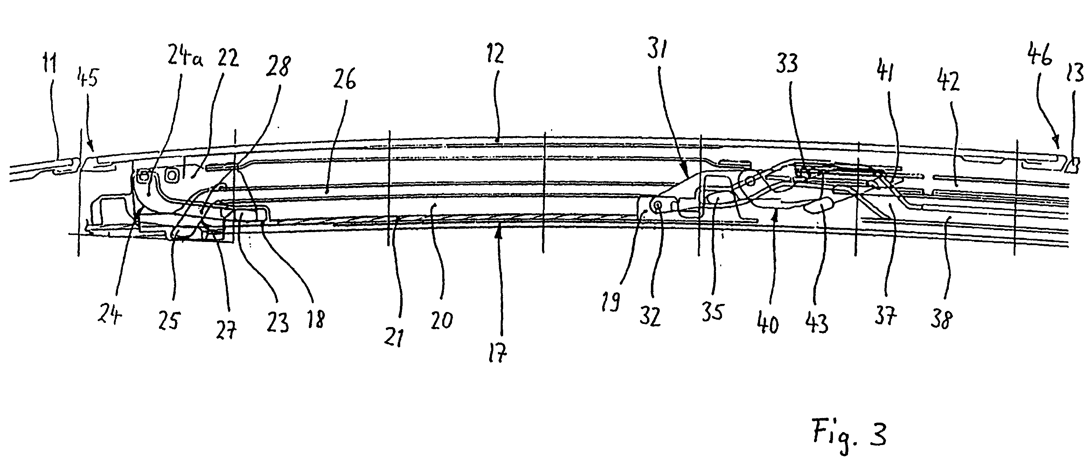

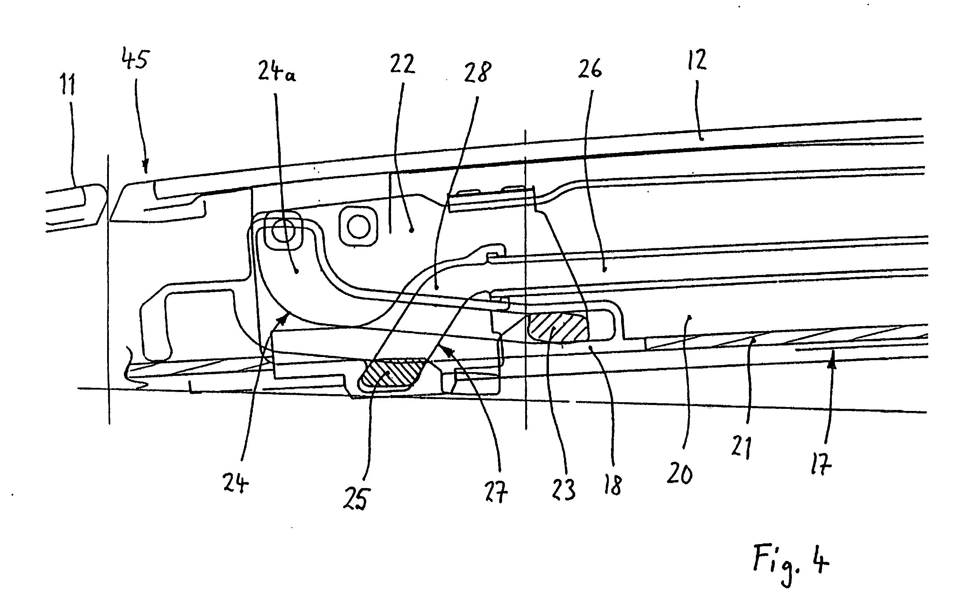

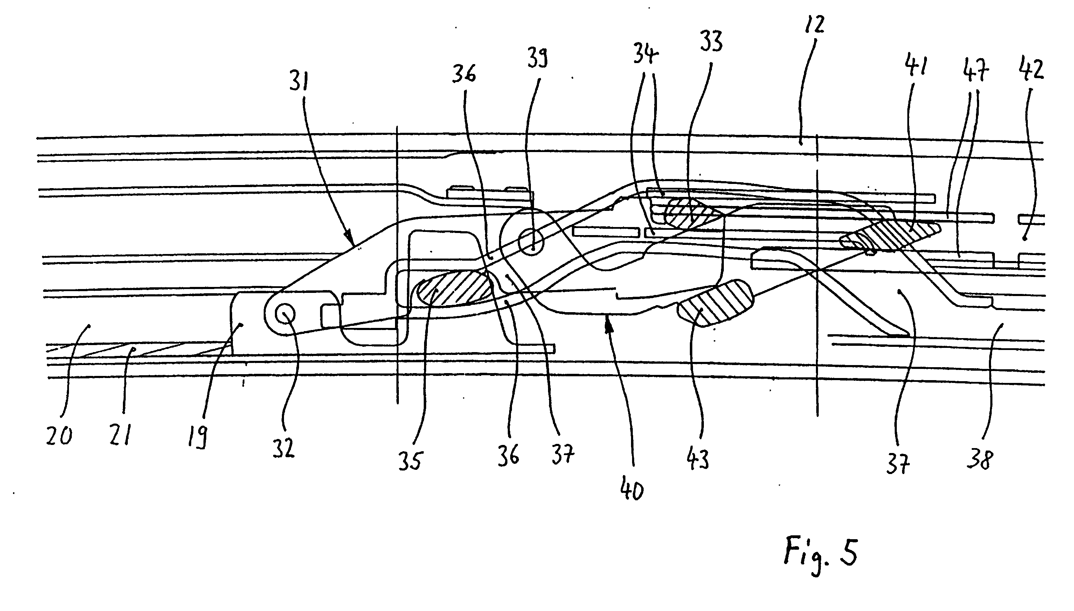

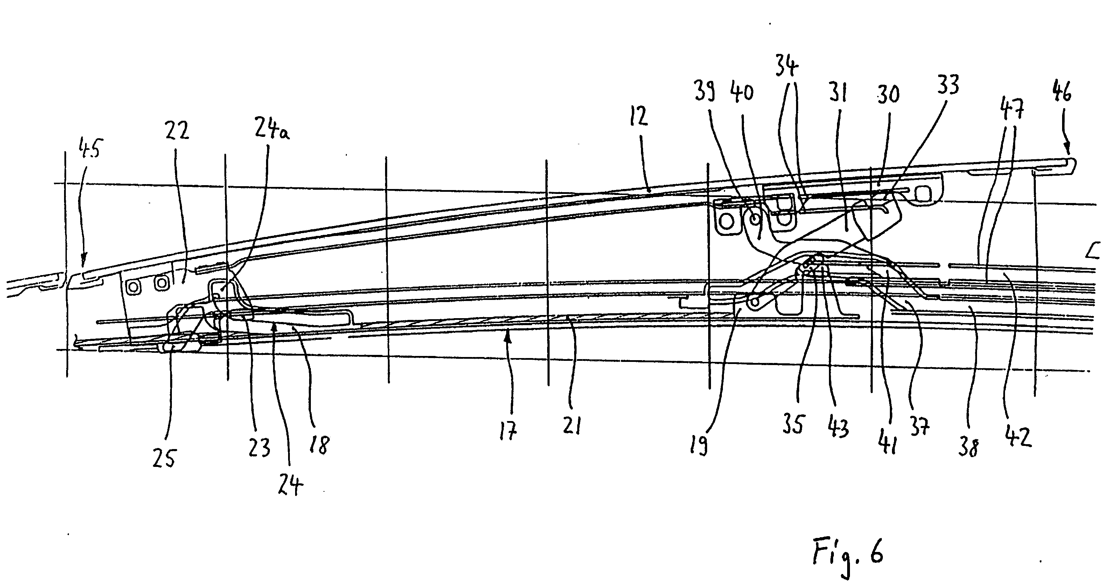

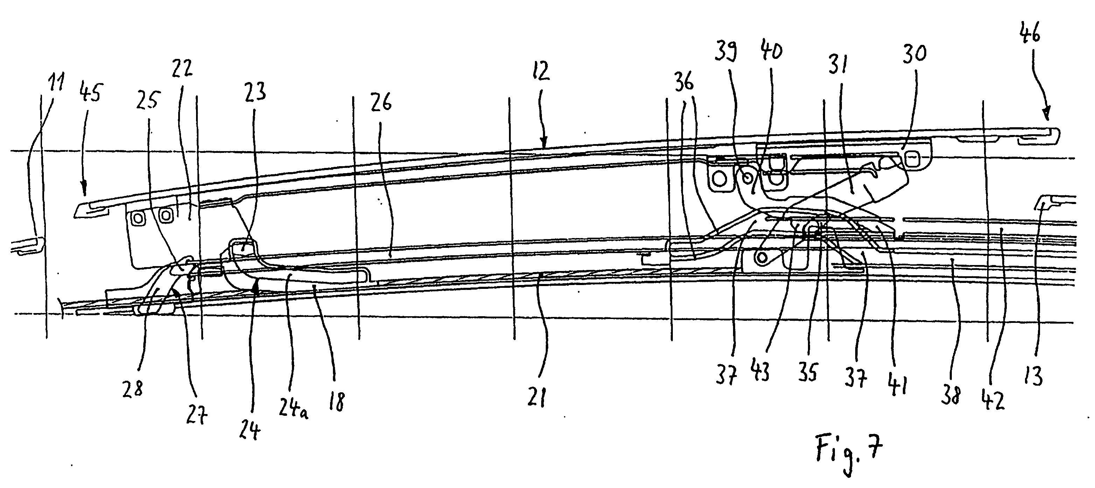

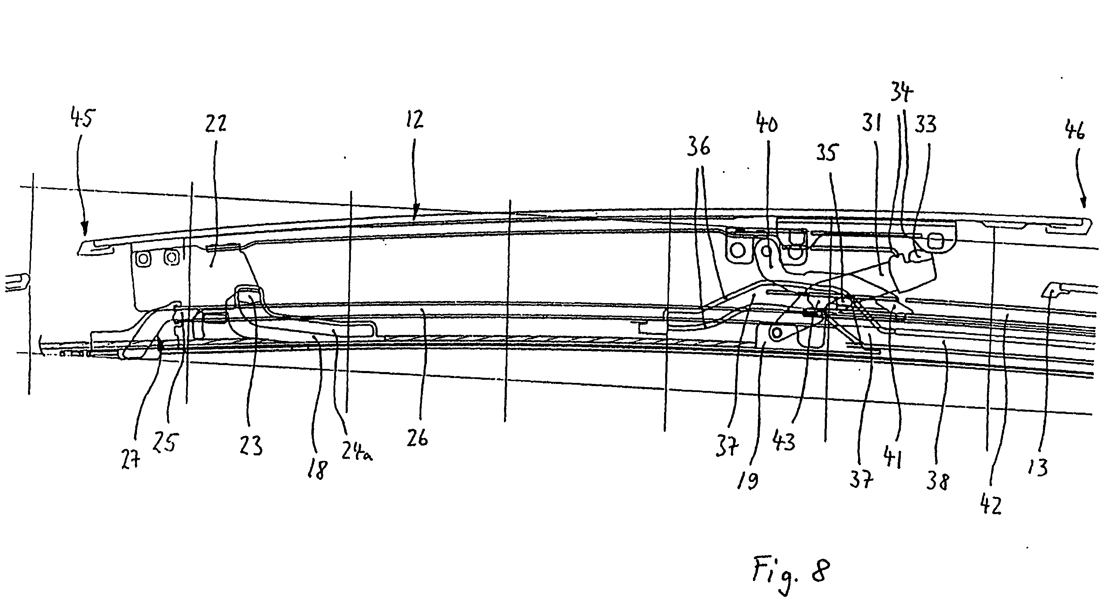

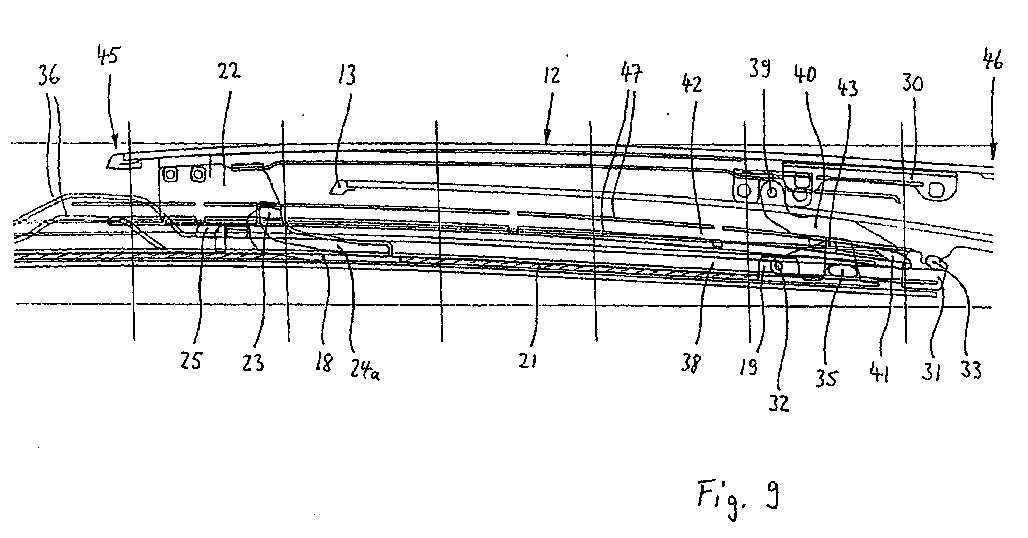

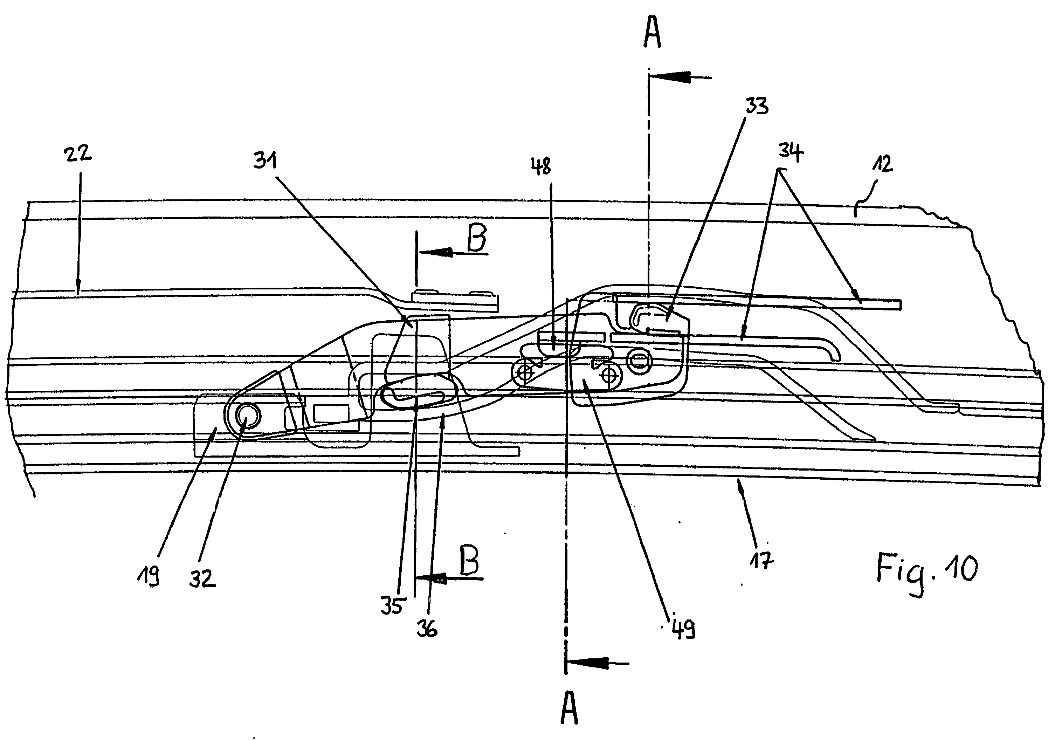

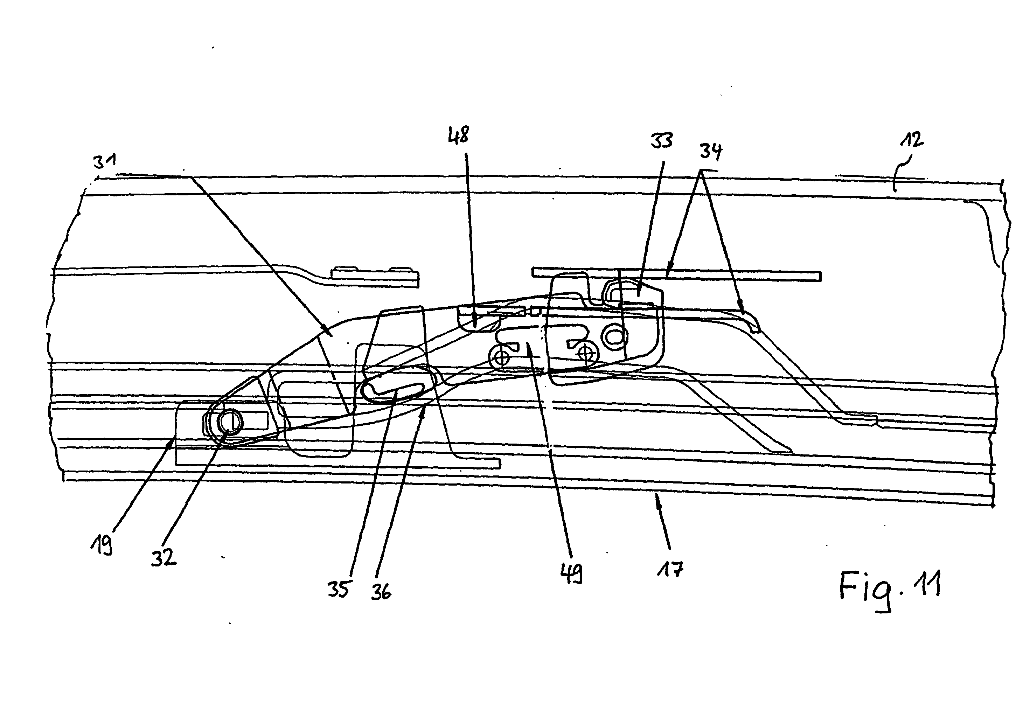

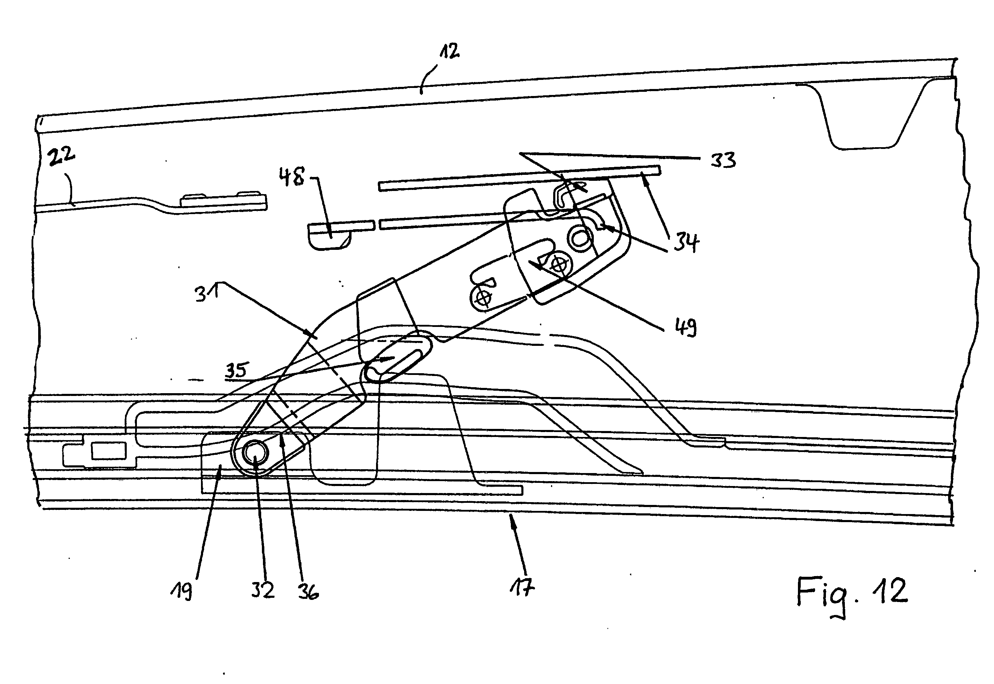

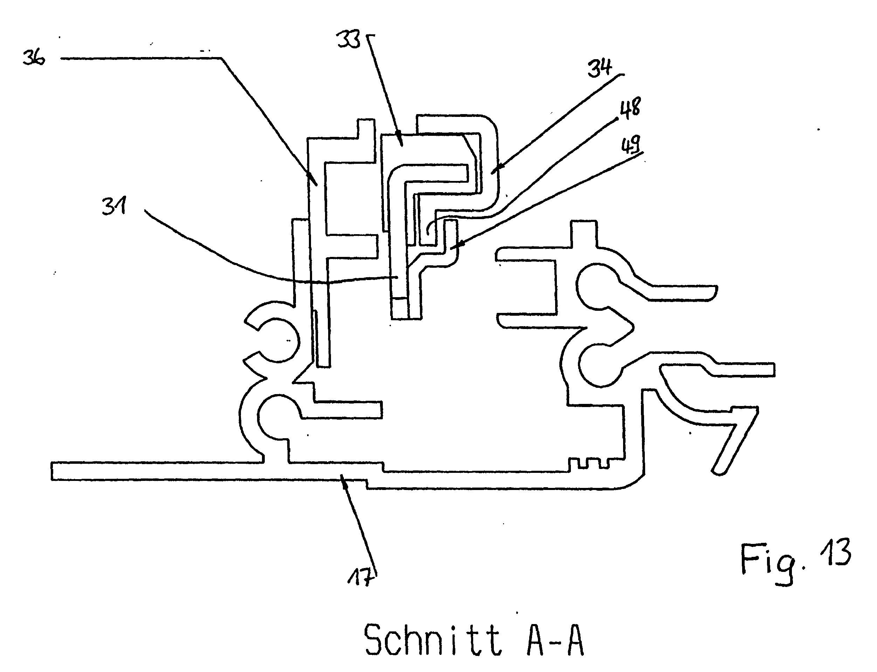

Die für das Ausstellen und Verschieben des Deckels 12 erforderliche Mechanik ist an der linken und rechten Seite des Deckels 12 gleichartig aufgebaut, so daß lediglich die Mechanik der einen Seite beschrieben und nachfolgend anhand der Fig. 3 bis 9 erläutert wird.

Die Ausstell- und Verschiebemechanik für den Deckel 12 umfasst eine Führungsschiene 17, die als Profilteil mit in Längsrichtung verlaufenden Führungsbahnen gebildet ist. In einer unteren Führungsbahn 20 sind ein vorderer Steuerschlitten 18 und ein hinterer Steuerschlitten 19 längsverschiebbar geführt. Die beiden Steuerschlitten 18 und 19 sind unter gegenseitigem Abstand mit einem Antriebskabel 21 fest verbunden. Die Steuerschlitten 18 und 19 sind außerdem mit der Vorderkante 45 bzw. der Hinterkante 46 des Deckels 12 verbunden, und zwar jeweils über eine Kulissenführung bzw. Stützhebel zum Anheben und Tragen der Vorderkante 45 bzw. der Hinterkante 46 des Deckels 12 bei dessen Verstellung zwischen seiner Schließ- und seiner Öffnungsposition, wie im folgenden zunächst für die Vorderkante 45 und dann für die Hinterkante 46 des Deckels 12 im einzelnen erläutert wird.

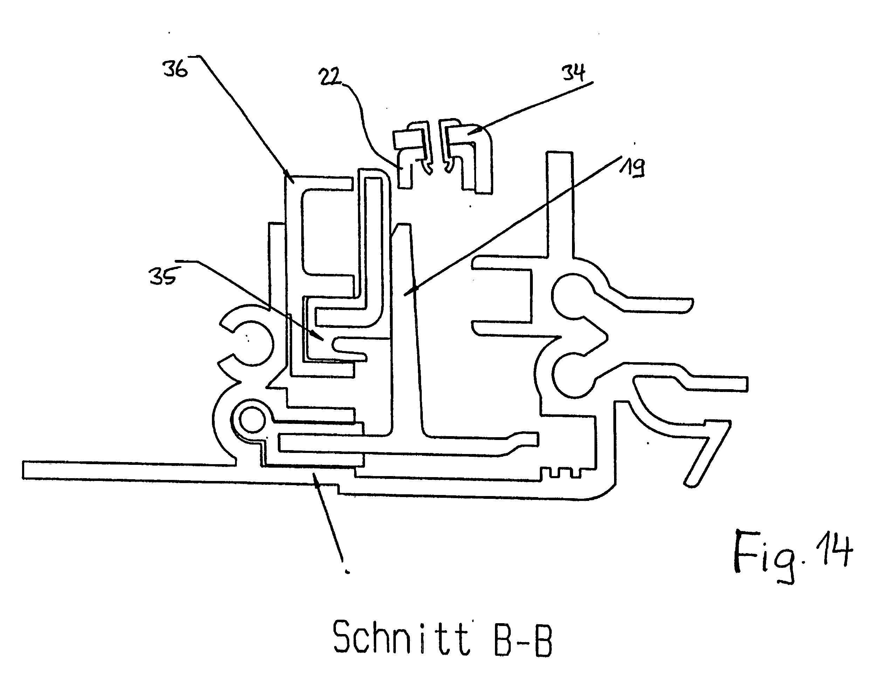

An der Unterseite des Deckels 12 ist im Bereich seiner Vorderkante 45 ein seitlicher vertikaler Deckelträger 22 angeordnet. Am unteren Rand des Deckelträgers 22 ist ein seitlich hervorstehender Gleitzapfen 23 mit Abstand von der Vorderkante 45 des Deckels 12 fest angebracht. Der Gleitzapfen 23 greift in eine Kulissenbahn 24a einer Hubkulisse 24 ein, die am vorderen Steuerschlitten 18 fest angebracht bzw. einstückig mit diesem gebildet ist. Die Kulissenbahn 24a der Hubkulisse 24 weist einen von ihrem hinteren Ende zu ihrem vorderen Ende im Bereich der Vorderkante 45 des Deckels 12 ansteigenden Verlauf auf. Insbesondere ist die Kulissenbahn 24a in etwa L-förmig mit einem vorderen kurzen gebogenen Schenkelabschnitt und einem hinteren langen gebogenen Schenkelabschnitt gebildet. Der Gleitzapfen 23 befindet sich bei geschlossenem Deckel 12 im Bereich des hinteren Endes der Kulissenbahn 24a (Fig. 3) und bei vorne angehobenem Deckel 12 sowie während der Verschiebung des Deckels 12 am vorderen erhöhten Ende der Kulissenbahn 24a (siehe z. B. Fig. 7). Der Gleitzapfen 23 bewegt sich in der Kulissenbahn 24a aufgrund einer durch das Antriebskabel 21 bewirkten Längsverschiebung des Steuerschlittens 18, wobei der Gleitzapfen 23 aus seiner in Fig. 3 gezeigten unteren Position bei geschlossenem Deckel 12 durch eine rückwärts gerichtete Verschiebung des vorderen Steuerschlittens 18 in seine obere Position gelangt, in welcher die Vorderkante 45 des Deckels 12 angehoben ist (siehe Fig. 7).

Von dem Deckelträger 22 steht seitlich ein Schiebezapfen 25 hervor, der ebenfalls am unteren Rand des Deckelträgers 22 angebracht ist und bei der dargestellten Ausführungsform in Fahrzeuglängsrichtung vor dem Gleitzapfen 23 liegt. Die Führungsschiene 17 umfaßt des weiteren eine Führungsbahn 26 für den Schiebezapfen 25, die parallel zur Schlittenführungsbahn 20 in Längsrichtung der Führungsschiene 17 verläuft. An das Vorderende der Schiebezapfen-Führungsbahn 26 schließt sich eine Kulisse 27 zur Führung der Vorderkante 45 des Deckels 12 bei deren Ausstell- und Absenkbewegung an. Diese Kulisse 27 ist fest mit der Führungsschiene 17 bzw. dem Fahrzeugdach 10 verbunden und besitzt eine Kulissenbahn 28, die sich an das Vorderende der Schiebezapfen-Führungsbahn 26 der Führungsschiene 17 anschließt und nach vorne abwärts verläuft. Bei geschlossenem Deckel 12 befindet sich der Schiebezapfen 25 (siehe Fig. 3) am unteren Ende der Kulissenbahn 28. Der Schiebezapfen 25 ist in der Fahrzeuglängsrichtung (x-Richtung) weitgehend spielfrei geführt und bestimmt damit die exakte Position der Vorderkante 45 in der Schließstellung des Deckels 12.

Die exakte Position der Vorderkante 45 in vertikaler Richtung (z-Richtung) wird durch den Gleitzapfen 23 bestimmt, der in dem Hinterabschnitt der Kulissenbahn 24a in vertikaler Richtung im wesentlichen spielfrei aufgenommen ist. Wenn die Vorderkante 45 des Deckels 12 mittels der Hubkulisse 24 und dem Gleitzapfen 23 durch nach hinten Verfahren des vorderen Steuerschlittens 18 angehoben wird, bewegt sich gleichzeitig der Schiebezapfen 25 entlang der nach hinten ansteigenden Kulissenbahn 28 nach oben und tritt schließlich in das Vorderende der Schiebezapfen-Führungsbahn 26 der Führungsschiene 17 ein, (siehe Fig. 5). Nun hat der Deckel 12 im Bereich seiner Vorderkante 45 eine Stellung eingenommen, aus der er nach hinten verschoben werden kann.

Nachfolgend wird der Hub- und Verschiebemechanismus im Bereich der Hinterkante 46 des Deckels 12 anhand einer Längsverschiebung des hinteren Führungsschlittens 19 über das Antriebskabel 21 erläutert.

Der Deckel 12 weist im Bereich seiner Hinterkante 46 einen sich abwärts erstrekkenden Deckelträger 30 auf (siehe Fig. 6). Zum Anheben des Hinterrandes bzw. der Hinterkante 46 des Deckels 12 dient ein Ausstellhebel 31, der an seinem Vorderende mittels eines Lagerbolzens 32 schwenkbar am hinteren Steuerschlitten 19 angelenkt ist und der an seinem Hinterende einen seitlich hervorstehenden hinteren Gleiter 33 aufweist. Der hintere Gleiter 33 greift bei geschlossenem Deckel (Fig. 3) bis zu einer angehobenen Deckelposition bzw. Übergabestellung (Fig. 5) in eine Deckelführung 34 an dem Deckelträger 30 ein, welche nach hinten offen ist (siehe beispielsweise Fig. 5). Zwischen dem Lagerbolzen 32 und dem hinteren Gleiter 33 steht seitlich von dem Ausstellhebel 31 ein vorderer Gleiter 35 vor, der in einer führungsschienenfesten Hubkulisse 36 gleitend geführt ist. Eine Kulissenbahn 37 der Hubkulisse 36 verläuft von vorn nach hinten zunächst ansteigend, daraufhin im wesentlichen parallel zur Längsrichtung der Führungsschiene 17 und daraufhin abfallend und in eine Führungsbahn 38 der Führungsschiene 17 mündend, die mit der Schlittenführungsbahn 20 zusammenfallen kann.

Mittels eines Lagerstifts 39 ist ein Stützhebel 40 für die Hinterkante 46 des Dekkels 12 an dem Deckelträger 30 angelenkt. Am dem Lagerstift 39 gegenüberliegenden Ende des Stützhebels 40 steht von diesem seitlich ein Führungszapfen 41 vor, der in sämtlichen Positionen der Hinterkante 46 des Deckels 12 in einer Führungszapfenbahn 42 einer bezüglich der erstgenannten inneren Führungsschiene 17 äußeren Führungsschiene 47 geführt ist. Die Führungszapfenbahn 42 verläuft in Längsrichtung der Führungsschiene 47. Statt der inneren Führungsschiene 17 und der äußeren Führungsschiene 47 kann auch nur eine Führungsschiene vorgesehen sein, die die genannten Führungsbahnen enthält.

In etwa in der Mitte zwischen dem Lagerstift 39 und dem Führungszapfen 41 steht seitlich von dem Stützhebel 40 ein Stützzapfen 43 hervor, der erst nach vollständigem Anheben der Hinterkante 46 des Deckels 12 in die Führungszapfenbahn 42 eintritt und bei weiterem Verschieben des Deckels 12 nach hinten in dieser Führungszapfenbahn 42 gleitet, um den rückseitig hochgeschwenkten Deckel 12 gemeinsam mit dem in der Führungszapfenbahn 42 geführten Führungszapfen 41 anstelle des Ausstellhebels 31 abzustützen.

Wie am besten aus den Fign. 10 bis 12 und 14 zu entnehmen ist, sind gemäß der Erfindung Verriegelungselemente vorgesehen, von denen eines als Verriegelungslasche 48 und das andere als Verriegelungswinkel 49 ausgebildet ist. Die Verriegelungslasche 48 ist an der Deckelführung 34 als nach unten weisender Steg in deren vorderem Bereich ausgebildet.

Der Verriegelungswinkel 49 steht dagegen seitwärts vom Ausstellhebel 31 vor und umgreift in der Schließposition des Deckels 12 gemäß Fig. 10 die Verriegelungslasche 48. Durch dieses Umgreifen des Verriegelungswinkels 49 um die Verriegelungslasche 48 kann der hintere Gleiter 33 auch bei einem sehr starken Druck auf Innenseite des Deckels 12 nicht um seine Längsachse aus der Dekkelführung 34 herausgedreht bzw. herausgerissen werden. In Schließposition des Deckels 12 ist somit eine sichere Verriegelung des Deckels 12 über den Ausstellhebel 31 mit der Führungsschiene 17 und somit mit dem festen Fahrzeugdach 10 gewährleistet.

Anhand der Figuren 5 bis 14 wird nachfolgend das Anheben der Hinterkante 46 des Deckels 12 bis in die Deckelöffnungsstellung gemäß Fig. 7 bzw. 12 erläutert.

Wenn der hintere Steuerschlitten 19 ausgehend von der Deckelschließposition (siehe Fig. 5) mittels des Antriebskabels 21 nach hinten bewegt wird, bewegt sich der vordere Gleiter 35 des Ausstellhebels 31 zunächst in dem vorderen ansteigenden Abschnitt der Kulissenbahn 37 der Hubkulisse 36 aufwärts (Fig. 6), so daß der aufwärts geschwenkte Ausstellhebel 31 mittels des hinteren Gleiters 33, der in der Deckelführung 34 geführt ist, die Hinterkante 46 des Deckels 12 über das feste Dach ausstellt. In der in Fig. 6 gezeigten Position tritt der bislang nicht eingerückte Stützzapfen 43 in die Führungszapfenbahn 42 ein und gleitet nun bei weiterer Rückwärtsbewegung des hinteren Steuerschlittens 19 gemeinsam mit dem vor ihm gleitenden Führungszapfen 41 entlang der Führungszapfenbahn 42 unter Abstützung des Deckels 12 unter einem vorgegebenen Ausstellwinkel nach hinten. Bei der Bewegung des hinteren Steuerschlittens 19 von der in Fig. 3 bzw. 5 gezeigten Position in die in Fig. 6 gezeigte Position, in welcher die Hinterkante 46 des Deckels 12 ausgestellt ist, bewegt sich der hintere Gleiter 33 vom vorderen Ende der Deckelführung 34 zu deren hinteren offenen Ende, aus welchem der hintere Gleiter 33 bei einer weiteren Rückwärtsbewegung des hinteren Steuerschlittens 19 austritt (siehe Fig. 7, die die Übergabestellung wiedergibt). Während des Übergangs von der in Fig. 6 gezeigten Position zu der in Fig. 7 gezeigten Position bewegt sich der vordere Gleiter 35 entlang des waagrechten Teils der Kulissenbahn 37 der Hubkulisse 36 und gelangt daraufhin in den abfallenden Teil der Kulissenbahn 37, so daß der Ausstellhebel 31 wieder nach unten in etwa in eine horizontale Stellung geschwenkt wird.

Bei einer weiteren Rückwärtsbewegung des hinteren Steuerschlittens 19 tritt der vordere Gleiter 35 in die Führungsbahn 38 ein, die den Ausstellhebel 31 während einer weiteren Rückwärtsbewegung des Steuerschlittens 19 in seiner abgesenkten horizontalen Stellung führt, in der er funktionslos ist. Die angehobene Position der Hinterkante 46 des Deckels 12 wird nun ausschließlich durch den Stützhebel 40 aufrechterhalten, dessen beide Zapfen 41 und 43 in der Führungszapfenbahn 42 geführt sind.

Die Schließbewegung des Deckels 12 erfolgt bei einem gemeinsamen gekoppelten Vorwärtslauf der beiden Steuerschlitten 18 und 19 mit umgekehrter Abfolge der Schwenkbewegungen der Hinterkante 46 und der Vorderkante 45 des Dekkels 12.

### Bezugszeichenliste

- 10: Fahrzeugdach
- 11: Windabweiserlamelle
- 12: Deckel
- 13: Dachscheibe
- 14: Seitenholm
- 15: Dachöffnung
- 16: Dichtelement
- 17: Führungsschiene
- 18: vorderer Steuerschlitten
- 19: hinterer Steuerschlitten
- 20: Schlittenführungsbahn
- 21: Antriebskabel
- 22: Deckelträger
- 23: Hubzapfen
- 24: Hubkulisse
- 24a: Kulissenbahn
- 25: Schiebezapfen
- 26: Verschiebezapfenführungsbahn
- 27: Kulisse
- 28: Kulissenbahn
- 30: Wange
- 31: Ausstellhebel
- 32: Lagerbolzen
- 33: hinterer Gleiter (an 31)
- 34: Deckelführung
- 35: vorderer Gleiter (an 31)
- 36: Hubkulisse
- 37: Kulissenbahn
- 38: Führungsbahn
- 39: Lagerstift
- 40: Stützhebel
- 41: Führungszapfen
- 42: Führungszapfenbahn
- 43: Stützzapfen
- 44: Windschutzscheibe
- 45: Vorderkante (von 12)
- 46: Hinterkante (von 12)
- 47: äußere Führungsschiene
- 48: Verriegelungslasche
- 49: Verriegelungswinkel

## Patentansprüche

1. Fahrzeugdach mit wenigstens einem an seiner Hinterkante (46) ausstellbaren und verschiebbaren Deckel (12), mit einer Steuermechanik für den Deckel (12), die einen nahe der Hinterkante des Deckels (12) an diesem angelenkten hinteren Hub- und Verschiebemechanismus (19, 31) aufweist, der wenigstens einen mit dem Deckel (12) verbundenen, in seitlichen Führungsschienen (17) verschiebbar geführten und antreibbaren Steuerschlitten (19) und einen Ausstellhebel (31) umfaßt,
**dadurch gekennzeichnet, daß**
an dem Ausstellhebel (31) und an einem mit dem Deckel (12) verbundenen Teil (22, 34) jeweils in der Schließposition des Deckels (12) wirksame Verriegelungselemente (48 bzw. 49) vorgesehen sind, die einem Ausdrücken des Deckels (12) nach oben entgegenwirken.

2. Fahrzeugdach nach Anspruch 1,
**dadurch gekennzeichnet, daß** das mit dem Deckel verbundene Teil von einer Deckelführung (34) gebildet wird, die mit einem Teil (33) des Hubund Verschiebemechanismus (19, 31) in Eingriff steht und eine Relativbewegung desselben gegenüber dem Deckel (12) beim Ausstellen ermöglicht.

3. Fahrzeugdach nach Anspruch 1 oder 2,
**dadurch gekennzeichnet, daß** das Verriegelungselement an dem mit dem Deckel verbundenen Teil (34) als nach unten abgebogene Verriegelungslasche (48) ausgebildet ist.

4. Fahrzeugdach nach einem der Ansprüche 1 bis 3,
**dadurch gekennzeichnet, daß** das Verriegelungselement an dem Ausstellhebel (31) als seitlich und nach oben vorstehender Verriegelungswinkel (49) ausgebildet ist.

5. Fahrzeugdach nach einem der Ansprüche 1 bis 4,
**dadurch gekennzeichnet, daß** der Deckel (12) oberhalb des festen Fahrzeugdachs (10) nach hinten verschiebbar ist.

6. Fahrzeugdach nach einem der vorhergehenden Ansprüche,
**dadurch gekennzeichnet, daß** der Hub- und Verschiebemechanismus den an dem hinteren Steuerschlitten (19) schwenkbar angelenkten Ausstellhebel (31) umfaßt, der durch eine dachfeste Hubkulisse (36) bei einer Rückwärtsbewegung des hinteren Steuerschlittens (19) zum Anheben der Hinterkante (46) des Deckels (12) angehoben wird und dabei die Verriegelungselemente (48, 49) außer Wirkeingriff bringt.

7. Fahrzeugdach nach Anspruch 6,
**dadurch gekennzeichnet, daß** nach dem Außereingriffbringen der Verriegelungselemente (48, 49) der Ausstellhebel (31) außer Eingriff mit dem Deckel (12) gebracht wird und dabei die Abstützung der Hinterkante (46) des Deckels (12) an einen separaten Stützhebel (40) übergibt.

## Claims

1. Motor vehicle roof having at least one cover (12) which can be raised at its rear edge (46) and displaced, having a control mechanism for the cover (12), which has a lifting and displacement mechanism (19, 31) which is attached to the cover (12) close to the rear edge of the latter and which comprises at least one control carriage (19) which is connected to the cover (12) and is displaceably guided and can be driven in the lateral guide rails (17), and a raising lever (31),
**characterized in that**
locking elements (48 and 49) which are in each case effective in the closed position of the cover (12) and counteract upward expulsion of the cover (12) are fitted to the raising lever (31) and to a part (22, 34) connected to the cover (12).

2. Motor vehicle roof according to Claim 1,
**characterized in that** the part connected to the cover is formed by a cover guide (34), which engages with a part (33) of the lifting and displacement mechanism (19, 31) and permits a relative movement of the same with respect to the cover (12) as it is raised.

3. Motor vehicle roof according to Claim 1 or 2,
**characterized in that** the locking element on the part (34) connected to the cover is formed as a locking lug (48) bent over downwards.

4. Motor vehicle roof according to one of Claims 1 to 3, **characterized in that** the locking element on the raising lever (31) is formed as a locking angle (49) that projects sideways and upwards.

5. Motor vehicle roof according to one of Claims 1 to 4, **characterized in that** the cover (12) can be displaced rearwards above the fixed motor vehicle roof (10).

6. Motor vehicle roof according to one of the preceding claims, **characterized in that** the lifting and displacement mechanism comprises the raising lever (31) which is attached such that it can pivot on the rear control carriage (19), which is raised by a slotted lifting guide (36) fixed to the roof during a rearward movement of the rear control carriage (19) in order to raise the rear edge (46) of the cover (12) and, in the process, brings the locking elements (48, 49) out of operative engagement.

7. Motor vehicle roof according to Claim 6,
**characterized in that**, after the locking elements (48, 49) have been disengaged, the raising lever (31) is disengaged from the cover (12) and, in the process, transfers the support for the rear edge (46) of the cover (12) to a separate supporting lever (40).

## Revendications

1. Toit de véhicule, avec au moins un panneau (12) coulissant et relevable au niveau de son bord arrière (46), avec une mécanique de commande pour le panneau (12), qui présente un mécanisme arrière (19, 31) de levage et de coulissement articulé sur le panneau (12) à proximité du bord arrière de ce dernier, mécanisme qui comprend au moins un coulisseau de commande (19) motorisable, assemblé au panneau (12) et guidé en coulissement dans des glissières latérales (17), ainsi qu'un levier de relevage (31),
**caractérisé en ce que** des éléments respectifs de verrouillage (48, 49), actifs dans la position fermée du panneau (12), sont prévus sur le levier de relevage (31) et sur une pièce (22, 34) assemblée au panneau (12), éléments qui s'opposent à une éjection du panneau (12) vers le haut.

2. Toit de véhicule selon la revendication 1, **caractérisé en ce que** la pièce assemblée au panneau est formée par un guide de panneau (34), qui est en prise avec une pièce (33) du mécanisme de levage et de coulissement (19, 31) et qui permet un mouvement relatif de ce dernier par rapport au panneau (12) lors du relevage.

3. Toit de véhicule selon la revendication 1 ou 2, **caractérisé en ce que** l'élément de verrouillage sur la pièce (34) assemblée au panneau est réalisé sous forme de patte de verrouillage (48) repliée vers le bas.

4. Toit de véhicule selon l'une des revendications 1 à 3, **caractérisé en ce que** l'élément de verrouillage sur le levier de relevage (31) est réalisé sous forme d'équerre de verrouillage (49) dépassant latéralement et vers le haut.

5. Toit de véhicule selon l'une des revendications 1 à 4, **caractérisé en ce que** le panneau (12) peut coulisser vers l'arrière au-dessus du toit fixe (10) du véhicule.

6. Toit de véhicule selon l'une des revendications précédentes, **caractérisé en ce que** le mécanisme de levage et de coulissement comprend le levier de relevage (31) articulé à pivotement sur le coulisseau arrière de commande (19), levier qui, par une coulisse de levage (36) solidaire du toit, est soulevé lors d'un déplacement vers l'arrière du coulisseau arrière de commande (19), afin de soulever le bord arrière (46) du panneau (12), et qui désengage alors les éléments de verrouillage (48, 49) de leur engagement actif.

7. Toit de véhicule selon la revendication 6, **caractérisé en ce que**, à la suite du désengagement des éléments de verrouillage (48, 49), le levier de relevage (31) est désengagé du panneau (12), et transfère alors le soutien du bord arrière (46) du panneau (12) à un levier de soutien séparé (40).
